(19)

**Europäisches Patentamt**

**European Patent Office**

**Office européen des brevets**

(11) **EP 3 340 132 A1**

(12) **EUROPEAN PATENT APPLICATION**

(43) Date of publication:
**27.06.2018 Bulletin 2018/26**

(21) Application number: **16306810.9**

(22) Date of filing: **23.12.2016**

(51) Int Cl.:
**G06Q 10/04** (2012.01)     **G06Q 10/06** (2012.01)
**G06Q 10/08** (2012.01)     **G06Q 10/10** (2012.01)
**G06Q 50/28** (2012.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Université Paris-Est Créteil Val de Marne**
**94010 Creteil Cedex (FR)**

(72) Inventor: **NAKIB, Amir**
**95200 SARCELLES (FR)**

(74) Representative: **Regimbeau**
**20, rue de Chazelles**
**75847 Paris Cedex 17 (FR)**

(54) **METHOD FOR SOLVING NON-LINEAR OPTIMIZATION PROBLEMS ON TECHNICAL CONSTRAINTS**

(57)     The invention relates to a method for solving nonlinear optimization problems implying technical constraints relating to technical parameters, said technical parameters being of a number greater than 50, said solving method being implemented by processing means of a computing unit, characterized in that said method is based on a fractal geometric partitioning of a search space using a plurality of hyperspheres as a geometrical form and wherein the hyperspheres partitioning said search space are overlapping.

**FIG. 1**

100

## Description

### FIELD OF THE DISCLOSURE

The present invention relates to the field of methods for solving optimization problems.

More specifically, the present invention relates to a method for solving a non-linear optimization problem on technical constraints relating to technical parameters.

In particular, it finds advantageous application to optimize problems with a large number of technical parameters.

### DESCRIPTION OF THE RELATED ART

This last decade, the complexity of optimization problems increased with the increase of the CPUs' power and the decrease of memory costs. Indeed, the appearance of clouds and other supercomputers provides the possibility to solve large scale problems. However, most of the deterministic and stochastic optimization methods see their performances go down with the increase of the number of parameters (dimension) of the problems. Evolutionary algorithms and other bio-inspired algorithms were widely used to solve large scale problems without much success.

The most efficient algorithms in literature are of stochastic nature, however this is a limiting factor when it comes to safety-critical applications where repeatability is important, as in image processing for example. Typically, in these cases, stochastic approach can be used only to improve the parameter settings of deterministic algorithms.

This stochastic nature of these algorithms makes their application in the industry complicated, because at each launch of the algorithm the provided result is not the same, therefore users generally content with a local solution (local optimum). Moreover, the justification of an obtained solution can also be difficult, because the method used to deduce it is based on a complex stochastic search rather than on a deterministic approach.

Another aspect is that the proof that a solution is optimal is not provided by stochastic heuristic approaches, not matters how much a solution might be close to an optimal solution.

The complexity of large scale problems or high dimensional non-convex functions comes from the fact that local minima (and maxima) are rare compared to another kind of point with zero gradient: a saddle point. Many classes of functions exhibit the following behavior: in low-dimensional spaces, local minima are common. In higher dimensional spaces, local minima are rare and saddle points are more common. For a function $f: R^n \rightarrow R$ of this type, the expected ratio of the number of saddle points to local minima grows exponentially with n. For all these reasons, the use of gradient based algorithms is not recommended for large scale problems.

The search for the global optimum of an objective function is very complex, especially, when all variables have interaction with the decision. This interaction increases in the case of large scale problems, then, a large number of evaluations of the objective function is needed to find a good enough solution. On other terms, in the case of large-scale problems, the performance of optimization methods decreases drastically.

Such known methods which cannot solve accurately, or in a reasonable time, large-scale problems are for example the publication by IBM (US8712738) or the Random walk algorithm by Siemens - US 20080247646).

Moreover, said methods cover only the case of medical applications.

We also know methods using geometric fractal decomposition in order to model the search space and to reduce it. In those methods, at each iteration, the search space is divided into subspaces in order to trap the global optimum in a small interval. It is known that in a reduced search space the use of metaheuristics allows reaching global solutions. Thus, in 1999, Demirhan introduced a metaheuristic for global optimization based on geometric partitioning of the search space called FRACTOP (D. Ashlock and J. Schonfeld, "A fractal representation for real optimization" in 2007 IEEE Congress on Evolutionary Computation, Sept 2007, p.87-94). The geometrical form used in the proposed method is the hypercube. A number of solutions are collected randomly from each subregion or using a metaheuristic such as Simulated Annealing (M. Dorigo, V. Maniezzo, and a. Colorni, "Positive feedback as a search strategy" Technical report 91-016, June 1991) or Genetic Algorithm (D. E. Goldberg, Genetic Algorithms in Search, Optimization and Machine Learning, 1st ed. Addison-Wesley Longman Publishing Co., Inc., 1989.). After that, a guidance system is set through fuzzy measures to lead the search to the promising subregions simultaneously and discard the other regions from partitioning. The main characteristic of the decomposition procedure used in FRACTOP is that there are no overlaps, thus it does not visit the same local area more than once. This approach can be efficient for low dimension problems. However, the decomposition procedure generates a number of subregions, as a function of the dimension n. Hence, when n is higher the complexity of the partitioning method increases exponentially.

Another method using a representation based on the fractal geometry is proposed by Ashlock in 2007 called Multiple Optima Sierpinski Searcher (S. Kirkpatrick, "Optimization by simulated annealing: Quantitative studies" pp. 975-986, 1984). The fractal geometrical form chosen is the Sierpinski triangle generated using the chaos game which consists in moving a point repeatedly from a vertex to another selected randomly.

As for FRACTOP, this method requires $2^n$ generators for n dimensions to exploit the covering radius which makes this representation also suffers from the curse of dimensionality. Moreover, the search in Ashlock does not cover the entire feasible region.

Furthermore, obtained results by the approach of Ashlock demonstrate limitations of these approaches using fractals.

Therefore, these known methods of fractal decomposition, called interval optimization methods, cannot be applied to problems comprising a large number of parameters, as they are no longer effective.

Thus, there is a need to develop a method for solving optimization problems of large dimensions, and in particular non-linear problems, giving a more accurate solution by covering the whole search space and having an algorithm complexity manageable.

## PRESENTATION OF THE INVENTION

An object of the invention is to propose a method for solving nonlinear optimization problems on technical constraints.

Yet another object of the invention is to determine a global optimum among the whole search space of candidate solutions. Another object of the invention is to propose a solution which allows reasonable computation times while still allowing reliability and robustness of results.

Another object of the invention is to propose a method for solving nonlinear optimization problems comprising a large number of technical parameters.

Thus, the invention proposes a method for solving nonlinear optimization problem implying technical constraints relating to technical parameters, said technical parameters being of a number greater than 50, said solving method being implemented by processing means of a computing unit, characterized in that said method is based on a fractal geometric partitioning of a search space using a plurality of hyperspheres as a geometrical form and wherein the hyperspheres partitioning said search space are overlapping.

Advantageously, but optionally, the method according to the invention may also comprise at least one of the following characteristics:

- the said method comprises the following steps:

     a) initialization of a search hypersphere with a dimension D equal to the number of parameters;
     b) decomposing said search hypersphere into a plurality of sub-hyperspheres, the said sub-hyperspheres overlapping each other;
     c) for each sub-hypersphere, calculation of a sub-hypersphere quality and classification of the sub-hyperspheres as a function of said calculated quality;
     d) determination among the sub-hyperspheres of the sub-hypersphere having the best quality;
     e) until a first stopping criterion is reached, repetition of steps b) to d), implemented on the basis of a search hypersphere (H) corresponding to the sub-hypersphere having the best quality as determined in the previous step;
     f) when the first stopping criterion is reached, for each sub-hypersphere resulting from the last implementation of step b), determining and storing a solution of each sub-hypersphere into a memory area of the computing unit;
     g) until a second stopping criterion is reached, steps b) to e) are implemented on the basis of a search hypersphere corresponding to the following sub-hypersphere of the classification determined in step c) following the penultimate implementation of b); and
     h) determining an optimum solution among the solutions stored in the memory area and storing the values of the technical parameters corresponding to this optimum solution;

- the first stopping criterion is a maximum level of recursive decomposition of the initial search hypersphere;
- the second stopping criterion is a tolerance value related to the problem to solve;
- the second stopping criterion is reached when a solution is stored for all the sub-hyperspheres from all the decomposition levels of the fractal partitioning;
- the step b) comprises the decomposition of the search hypersphere in 2xD sub-hyperspheres;
- the step a) of initialization comprises the determination of a maximum level of recursive decomposition of the initial search hypersphere;
- the maximum level of recursive decomposition of the search hypersphere is equal to 5;
- the step c) further comprises storing ranked sub-hypersphere into a memory area;
- the step a) of initialization of the search hypersphere comprises: determining the position of the center C and the initial radius R of the search hypersphere, such as C = L + (U
- L)/2, R=(U-L)/2, wherein U is the upper bound and L is the lower bound of a search space;
- the sub-hyperspheres overlapping each other of step b) are obtained by decomposing the search hypersphere into a plurality of sub-hyperspheres, then applying a radius inflation factor of the said sub-hyperspheres.
- inflation factor corresponds to an increase of the radius of sub-hyperspheres by a factor of at least 1.75;
- the inflation factor corresponds to an increase of the radius of sub-hyperspheres by a factor of at least 2.80;
- a plurality of sub-hyperspheres is stored into a memory area;
- the plurality of sub-hyperspheres is stored into a memory area by the storing the position of the center C of the said sub-hyperspheres;
- the position of a plurality of sub-hyperspheres (sH) is computed from a position of a sub-hypersphere (sH) stored into a memory area; and
- the step d) of determining the sub-hypersphere (sH) having the best quality and/or the step f) of determining and storing a solution of each sub-hypersphere (sH) into a memory area is performed using existing optimization software.

Furthermore, the invention relates to a computer program product having computer-executable instructions to enable a computer system to perform the method of any one of the characteristics described previously.

## BRIEF DESCRIPTION OF DRAWINGS

Other characteristics, objects and advantages of the present invention will appear on reading the following detailed description and with reference to the accompanying drawings, given by way of non-limiting example and on which:

- figure 1 shows some steps of a method for solving nonlinear optimization on technical constraints relating to technical parameters according to the invention;
- figures 2a and 2b show a representation of a search space by a set of hyperspheres according to the invention;
- figures 3a and 3b show a decomposition of an hypersphere by sub-hyperspheres and their inflation according to the invention,
- figure 4 shows a performance comparison of the method according to the invention with known algorithms;
- figure 5 shows a modeling of a hydroelectric power station;
- figure 6a illustrates the determination of technical parameters of an image registration according to the invention; and
- figure 6b shows a convergence curve of errors obtained by applying the method according to the invention.

## DETAILED DESCRIPTION OF AT LEAST ONE EMBODIMENT OF THE INVENTION

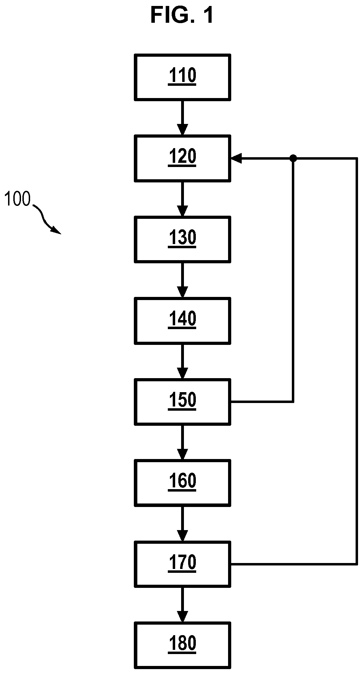

Figure 1 illustrates some steps of the method 100 for solving nonlinear optimization on technical constraints relating to technical parameters.

The said method **100** for solving optimization problems relies on a recursive decomposition of a search space E (the space of candidate solutions of an optimization problem) modeled by a hypersphere H into a given number of sub-hyperspheres sH that are, afterwards, enlarged in order to cover all the search space E. Such recursive division of the search space E with fixed number of sub-hyperspheres represented, is called a fractal decomposition and the number of sub-hyperspheres sH inside a hypersphere H is called the fractal dimension.

Hence, in the following subsections, we will detail this strategy.

*Decomposition of the search space by hyperspheres*

In a step **110,** the search space E is approximated, at first, by an initial hypersphere $H^0$. The choice of this geometry is motivated by the low complexity and its flexibility to cover all the search spaces. The initial hypersphere $H^0$ is described using two parameters: position of its center C and its initial radius R that can be obtained using the following expressions:

$$C = L + (U - L)/2;$$

$$R = (U - L)/2;$$

where U is the upper bound and L is the lower bound of the whole search space E.

The hypersphere $H^0$ is a sphere of D dimensions, D corresponding to the number of technical parameters of an optimization problem on technical constraints.

Then, in a step **120** this first hypersphere $H^0$ is divided into a plurality of inferior sub-hyperspheres $sH^1$. The said plurality can be a multiple of the dimension D.

To this end, a determined number of hyperspheres is placed inside the first one, then, they are inflated. The inflation is stopped when the said hyperspheres are "kissing" each other. The search space E can be decomposed using a fractal dimension equal to twice its dimension D (2xD). Such decomposition allows covering most of the search space, and has a low complexity for computation. Thus, we can place a hypersphere on each side of each axis: two for each axis.

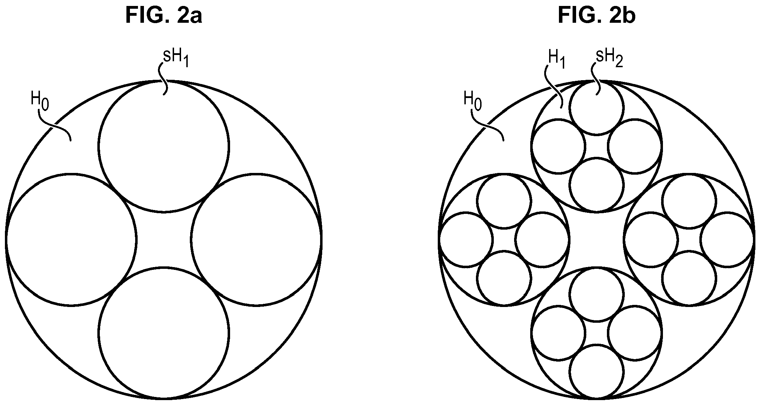

Figures 2a and 2b illustrate a hypersphere H approximating a search space with a dimension equal to 2. As represented, the hypersphere $H^{k-1}$ is divided in 4 sub-hyperspheres $sH^k$.

$k$ is an integer corresponding to a deep (level) of the decomposition of the search space E.

Note that one refers either to a hypersphere $H^k$ or a sub-hypersphere $sH^k$, as it describes the same hypersphere at a given level k of fractal decomposition.

Thus, figure 2a illustrates a first level decomposition (k=1) of a first hypersphere $H^0$ which is divided in 4 sub-hyperspheres $sH^1$.

Figure 2b illustrates a second level of decomposition, where each hypersphere of the first level are divided in 4 sub-hyperspheres $sH^2$. The choice of this number of sub-hyperspheres $sH^k$ is guided by the following rule: the ratio between radii of the first hypersphere $H^{k-1}$ and that of other 2xD sub-hyperspheres $sH^k$ inside, is about to $1 + \sqrt{2} \approx 2.41$. In this case, the ratio does not depend on the dimension of the problem. Then, centers $\vec{C}^k$, and the radius $r_k$ of a hypersphere $H^k$ at a given level k of fractal decomposition, are given by:

$$\vec{C}^k = \begin{cases} \vec{C}^{k-1} + \left(r_{k-1} - \left(r_{k-1}/2.41\right)\right) \times \vec{e}_j & \text{, if } i = 2 \times j; \\ \vec{C}^{k-1} - \left(r_{k-1} + \left(r_{k-1}/2.41\right)\right) \times \vec{e}_j & \text{, otherwise.} \end{cases}$$

where $\vec{e}_j$ is the unit vector at the dimension $j$ is set to 1, and i is the number of hypersphere at a given level.

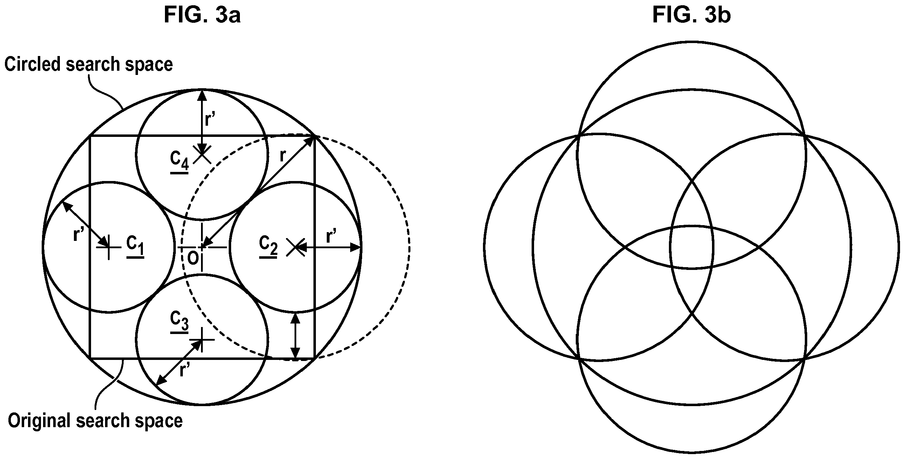

As shown illustrated in figure 3a, the decomposition of an hypersphere H using sub-hyperspheres sH for 2 x D, does not entirely cover the search space E. Thus, the global optimum can be missed and the algorithm may not find the global optimum. To avoid this situation, in a step **130,** an inflation factor of the obtained sub-hyperspheres is used. Radii of the sub-hyperspheres are increased by δ (its value was fixed to at least 1.75 empirically) to obtain inferior hyperspheres, represented with their centers and their radii. This enlargement allows overlaps between sub-hyperspheres sH to cover all the search space E as shown in figure 3b.

Then, the inflated radii of hyperspheres are given by:

$$r_k = \delta \times r_{k-1}/2.41$$

where δ is the inflation coefficient, $r_{k-1}$ and $r_k$ are the radii of the hyperspheres at the level k - 1 and $r_k$, respectively. Advantageously, δ is at least about 2.80, when the fractal dimension is equal to 2xD, as this coefficient is optimum.

A method of estimation of the lower bound value of the inflation coefficient is detailed further in the annex section.

*Search of the best direction*

Then, in a step **140** each sub-hypersphere sH at a k-level is evaluated to have its quality measure. Based on this fitness, these sub-hyperspheres are sorted, and the one with the best one is chosen to be the next hypersphere to be visited (decomposed). This procedure allows the method 100 to direct the search for the most promising region, and to lead the optimization within a reduced space at each level.

To this end, for each sub-hypersphere sH at a k-level, the initial solution $\vec{S}$ is positioned at the center $\vec{C}^k$ of the current hypersphere H (hypersphere to evaluate). Then, starting from the center of the current hypersphere H, two solutions $\vec{S}_1$ and $\vec{S}_2$ along each dimension of the search space are generated using the radius $r_k$ as expressed previously.

Then, the best among these three solutions will represent the quality or fitness of the evaluated hypersphere.

$$\vec{s}_1 = \vec{C}^k + \frac{r_k}{\sqrt{D}} \times \vec{e}_d, \quad \text{for} \quad d = 1, 2, ..., D$$

$$\vec{s}_2 = \vec{C}^k - \frac{r_k}{\sqrt{D}} \times \vec{e}_d, \quad \text{for} \quad d = 1, 2, ..., D$$

where $\vec{e}_d$ is the unit vector which the $d^{th}$ element is set to 1 and the other elements to 0, while, k is the current deep of the decomposition.

Thus, advantageously, the following algorithm represents the search of the best solution for a given hypersphere:

---

Step 1) Initialization:

   Step 1.1) Initialize the solution $\vec{S}$ at the center $\vec{C}^k$ of the current hypersphere $H^k$.

   Step 1.2) Evaluate the objective function of the solution $\overline{S}$.

Step 2) Generation of solutions $\vec{S}_1$ and $\vec{S}_2$:

   For each dimension i do

   Step 2.1) $s1[i] = s[i] - \frac{r_k}{\sqrt{D}}$

   Step 2.2) $s2[i] = s[i] + \frac{r_k}{\sqrt{D}}$

   End for

Step 3) Evaluate the objective function of the solutions $\vec{S}_1$ and $\vec{S}_2$.

Step 4) Return the best solution in the set $\{\vec{S}, \vec{S}_1, \vec{S}_2\}$.

---

At a given level k, all hyperspheres can be stored in a sorted list Ik depending on their scores (fitnesses). Afterwards, the obtained list can be pushed into a data structure (for example a stack $S_{memory}$ or a graph) to save regions that are not visited yet. Alternatively, the search for a best solution for said given hypersphere can be performed through the implementation of an existing optimization software of the art. Such software can be selected from, for example, CPLEX (IBM), Gurobi, GLPK, MOSEK, CBC, CONOPT, MINOS, IPOPT, SNOPT, KNITRO, LocalSolver and CP Optimizer.

Once the search in the current hypersphere is terminated without success, in a step **150** the first hypersphere at the top of Ik (the hypersphere with the best quality) is selected to be decomposed and so on, by applying recursively the steps 120 to 150, until reaching the last level.

Once the last level of recursive decomposition, called the fractal depth $k_{max}$, is reached, in a step **160,** an intensive local search procedure (ILS) is applied to the sorted sub-hyperspheres to find the global optimum.

Advantageously, the fractal depth $k_{max}$ is equal to 5. Such value allows a good compromise between the size of the space and a computation time.

*Intensive Local Search (ILS)*

At the last level $k_{max}$, any stochastic or deterministic optimization method can be used. Herein, the goal of this work is to design a low complex and deterministic optimization method, consequently, a local search method based on variable neighbor search (VNS) strategy can be considered.

Indeed, the used local search is based on a line search strategy, and adapted to solve high-dimensional problems. The main idea is to consider a neighborhood search for each dimension of the space sequentially: at each iteration, the search is performed on only one dimension d. Thus, from the current solution $\vec{S}$, two solutions $\vec{S}_1$ and $\vec{S}_2$ are generated by moving $\vec{S}$ along the dimension d using the equations given by:

$$\vec{S}_1 = \vec{S} + \Upsilon \times \vec{e}_d$$

$$\vec{S}_2 = \vec{S} - \Upsilon \times \vec{e}_d$$

where $\vec{e}_d$ is the unit vector which the $d^{th}$ element is set to 1 and the other elements are set to 0, and $\Upsilon$ the step size is initialized to the value of the radius of the current hypersphere.

Then, the best among three solutions $\vec{S}$, $\vec{S}_1$, and $\vec{S}_2$ is selected to be the next current position $\vec{S}$.

The parameter $\Upsilon$ is updated, only, if there is no improvement after checking in all dimensions.

Depending on the situation, the step size is adapted using the following rules:

- if a better candidate solution was found in the neighborhood of $\vec{S}$, then, the step size $\Upsilon$ is for example halved;
- the step size $\Upsilon$ is decreased until reaching a tolerance value ($\Upsilon_{min}$), representing the tolerance or the precision searched. Thus, the stopping criterion for the ILS is represented by the tolerance value $\Upsilon_{min}$. The value of $\Upsilon_{min}$ is for example fixed to $1 \times e^{-20}$.

The ILS is executed without any restriction on the bounds. In other terms, the method 100 allows following a promising direction outside of the current sub-region bounds.

If the generated solution is outside the current inflated hypersphere, it is ignored and is not evaluated.

The following algorithm describes some steps of the ILS procedure:

---

Step 1) Initialization:

    Step 1.1) Initialize the current position $\vec{S}$ at the center $\vec{C}^k$ and define $\Upsilon_{min}$ of the current hypersphere $H^k$.

    Step 1.2) Evaluate the objective function of the solution $\vec{S}$.

    Step 1.3) Initialize the step $\Upsilon$ with the radius $r_k$ of the current hypersphere $H^k$.

Step 2) Neighbor search $\vec{S}$:

    For each dimension d do

        Step 2.1) s1[d] = s[d] - $\Upsilon$

        Step 2.2) s2[d] = s[d] + $\Upsilon$

        Step 2.3) Evaluate the objective functions of the solutions $\vec{S}_1$ and $\vec{S}_2$.

        Step 2.4) Update $\vec{S}$ using the current position with the best one among $\{\vec{S}, \vec{S}_1, \vec{S}_2\}$.

    End for

Step 3) If there is no improvement of $\vec{S}$, decrease the step $\Upsilon$: $\Upsilon = \Upsilon$ x 0.5.

Step 4) Repeat Step 2-Step 3 until $\Upsilon < \Upsilon_{min}$.

Step 5) Return the best solution $\vec{S}$.

---

Alternatively, ILS can be performed using an existing optimization software as listed above.

When all of these sub-hypersheres $sH^k$ from the last level $k_{max}$ are visited, in a step **170,** the search is raised up to the previous level k-1, replacing the current hypersphere H with the following sub-hypersphere $sH^k$ from the sorted sH list.

When all the plurality of hyperspheres issued from the k-1 level hypersphere are visited, it is removed from the data structure (for example a stack or a graph) where the hyperspheres not visited are stored.

Then, the steps 120 to 170 are repeated until the stopping criterion is reached or the sub-hyperspheres from all the levels are visited.

In a step **180,** the best solution among all the hyperspheres visited is returned by the method 100.

As we can notice in the proposed approach, all the mechanisms used are exact methods which denotes of its accuracy. Besides, sH ranking is important for the efficiency of the method 100, it favors the search in the most promising region to reach the global optimum faster.

*Overview of the method 100*

The optimization process starts with hypersphere inside the problem search space, which is divided into a plurality of sub-regions (for example 2xD) delimited by the new smaller hyperspheres. This procedure is repeated until a given deep or level. At each level, the plurality of sub-regions are sorted regarding their fitness respectively, and only the best one is decomposed using the same procedure. However, the other sub-regions are not discarded, they would be visited later: if the last level search (ILS) is trapped in a local optimum.

As the different centers of the sub-regions were stored, when all sub-regions of the last level k were visited, and the global optimum was not found, the second sub-region at level k - 1 is decomposed, and the ILS procedure is started again from the best sub-region. In some cases (*i.e.* optimal solution at the limit of the search space), the ILS algorithm can generate positions out of the search space, then, they are simply ignored. The diversification (going from a hypersphere to another at different levels) and intensification procedures (last level search) pointed out may lead to a deeper search within a subspace which is geometrically remote from the subspace selected for re-dividing at the current level.

The following algorithm illustrates the succession of the different steps of decomposition, evaluation of quality and intensive local search of the method 100.

---

**Step 1)** Initialization of the hypersphere H:

    **Step 1.1)** Initialize the center C at the center of the search space.

    **Step 1.2)** Initialize the radius R with the distance between the center C and the lower bound I or the upper bound U of the search space.

**Step 2)** Divide the hypersphere H using the Search Space Fractal Decomposition method.

**Step 3)** Use of the local search:

    **For each** sub-hypersphere sH **do**

    **Step 3.1)** Evaluate the quality of the hypersphere    sH.

    **End for**

**Step 4)** Sort the sub-hyperspheres sH using the local optima found for each one.

**Step 5)** Update the current hypersphere H:

    **If** the last level is reached then

        **For each** sub-hypersphere sH do Apply the ILS.

        **End for**

        **Step 5.1)** Replace the current hypersphere H with the

        next sub-hypersphere sH from the previous level.

    **Else**

        **Step 5.2)** Replace the current hypersphere H with the best sub-hypersphere sH.

    **End if**

**Step 6)** Repeat Step 2-Step 5 untila stopping criterion is met.

---

One can notice that the proposed algorithm is deterministic: the last level heuristic is exact and the decomposition also does not contain any stochastic process.

Advantageously, the method 100 can be implemented in parallel computation architectures like cloud computing, clusters, HPC *etc.,* as the method is particularly adapted to such architecture. Indeed, the processing of steps of determination of quality and/or last level search can be implemented in separated threads for each sub-hypersphere being processed.

*Complexity Analysis*

The proposed method 100 includes three distinct parts. The first one is the decomposition of hyperspheres process, the second corresponds to the quality evaluation of the hypersphere and the third is the last level local search.

Then the complexity of the method 100 is given by the following table:

|  | Asymptotic complexity |
|---|---|
| Decomposition of hyperspheres | $\log_k(D)$ |
| Quality evaluation of an hypersphere | 1 |
| Local search | $\log_2(r/\Upsilon_{min}))$ |

where D represents the problem dimension D, r the radius of the current hypersphere and $\Upsilon_{min}$ the local search tolerance threshold. Thus, the method 100 has a complexity given by: $O(\log_k(D) + 1 + \log_2(r/\Upsilon_{min})) = O(\log_k(D))$.

Hence, the asymptotic complexity of the proposed approach is $O(\log_k(D))$. Thus, the method 100 has a logarithmic complexity depending on deep of the search.

On the other hand, the proposed algorithm uses a stack to store the hyperspheres that are not visited yet. Indeed, after each decomposition, the list of the obtained hyperspheres is pushed, for example, into a stack implemented for this purpose, except for the last level. Once a hypersphere is entirely visited, it is removed from the list of the current level, and selects the next one to be processed. Besides, in the case of 2xD decomposition, for the current list of hyperspheres, 2xD solutions representing their qualities are also stored in a list in order to sort the hyperspheres. In our case, in the worst case, the lists concerning the k-1 levels contains 2xD hyperspheres which makes the algorithm use (k-1)x(2xD)+2xD of work memory. Thus, the memory complexity of the method 100 is 0(D).

Moreover, to store the list of hyperspheres, we can only store the coordinates of the center of the hyperspheres, thus allowing a low consumption of memory.

Alternatively, the center positions C of the hyperspheres H of a given level k can be deduced from the center position C of a given hypersphere H of the said level. In that case, only one hypersphere H is stored and coordinates of the center of the other hyperspheres H are not stored, thus allowing less memory usage. This is particularly advantageous when the method 100 is implemented on small computers as for example, microcontrollers, embedded systems or by using a Field-Programmable Gate Array (FPGA).

*Performance comparison*

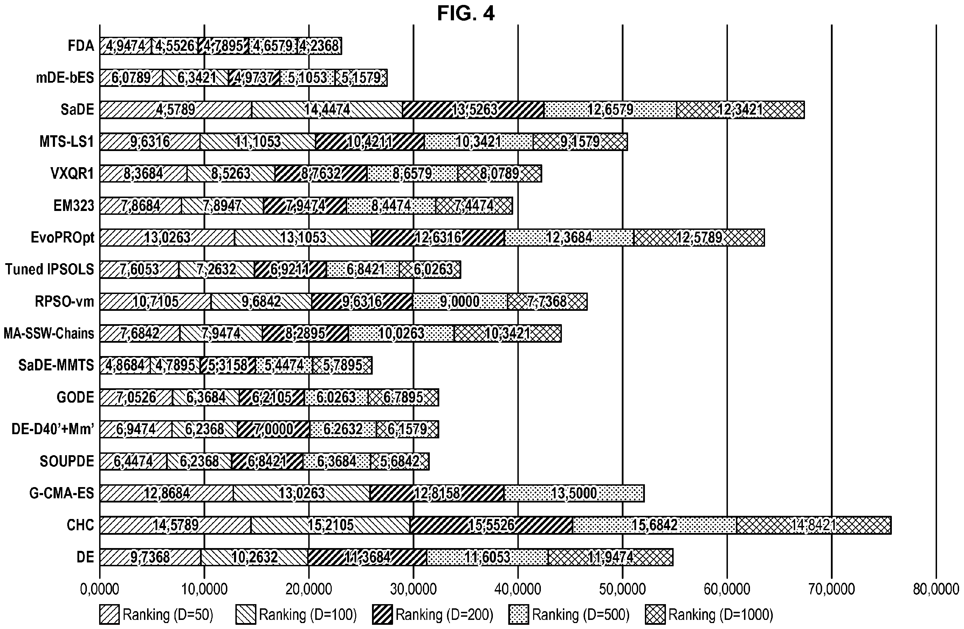

Figure 4 illustrates the ranking of 16 algorithms taken from the literature ([1]-[9]) of the proposed approach for dimensions D = 50, D = 100, D = 200, D = 500 and D = 1000 using a radar plot. The used rank method is based on the Friedman and Quade tests [10]. In fact, more the rank is low, the better the algorithm is. Hence, the illustration shows that the proposed approach is competitive with the mDE-bES and SaDE and far better than the other compared algorithms.

*Application of the method 100 to hydroelectric benchmark*

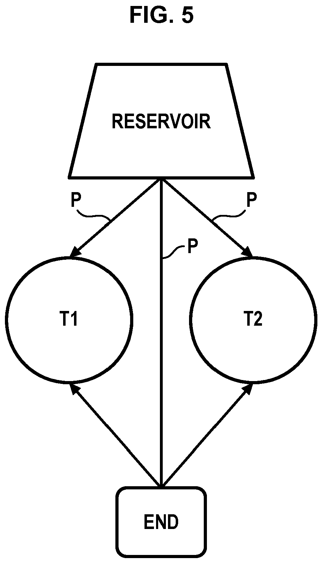

Figure 5 illustrates an optimization problem of a hydroelectric power station 500.

The problem is to optimize the production of electricity given multiple constraints.

The constraints on a pipe P connecting a reservoir to an End are as follows:

- a reserved flow of 2 m$^3$/s is imposed throughout the year ($q^{LO}$ = 2m$^3$/s);
- there is no maximum limitation of flood flow;
- no flow gradient is imposed;
- transfer time: $\delta_{tn}$ = 1 hour.

The constraints on the reservoir tank are as follows:

- the minimum V$^{LO}$ volume is 0 m$^3$;
- the maximum V$^{UP}$ volume is 25,000,000 m$^3$;
- no pipe reaches this tank;
- input water is required;
- 3 pipes exit: one towards the turbine T1, one towards the turbine T2 and one towards the End;
- the tank will not overflow unless it is possible to do otherwise;
- the initial volume is equal to the maximum volume of the tank;
- the final volume is equal to the initial volume.

The constraints on the turbine T1 in a linear case are as follows:

- the maximum turbulent flow rate is: $q^{UP}$ = 230 m$^3$/s;
- production sold at spot prices;
- production curve = 1.07 * Flow rate.

The constraints on the turbine T2 in a linear case are as follows:

- the maximum turbulent flow rate is: $q^{UP}$ = 180 m$^3$/s;
- production sold at spot prices;
- production curve = 1.1 * debit.

The constraints on the turbine T1 in a non-linear case are as follows:

- the maximum turbine flow rate is: $q^{UP}$ = 230 m$^3$/s;
- minimum technical operation: fLO = 27 MW;
- production sold at spot prices;
- production curve = f (Flow, Volume);
- optional: constraint that the plant runs at least 2 consecutive;
- optional: the plant can only start up to 3 times on the same day.

The constraints on the turbine T2 in a non-linear case are as follows:

- the maximum turbinable flow rate is: $q^{UP}$ = 180 m$^3$/s;
- minimum technical operation: fLO = 135 MW;
- production sold at spot prices;
- production curve = f (Flow, Volume);
- optional: the plant must stop at least 3 hours before it can be restarted;
- optional: the T2 plant must not operate if the tank of the reservoir is below 3,350,000m$^3$.

The following table shows the comparison between the optimization by the method 100 and by the software Cplex (Ibm) given different scenarios and in the case of a linear problem.
As we can observe, the method 100 allows finding the same global optimum as other known methods.

| Scenario | HydroKISSS | Cplex |
|---|---|---|
| sc1 | 3,37E+07 | 3,35E+07 |
| sc2 | 4,67E+07 | 4,67E+07 |
| sc3 | 4,79E+07 | 4,80E+07 |
| sc4 | 4,45E+07 | 4,46E+07 |
| sc5 | 3,09E+07 | 3,09E+07 |
| sc6 | 3,39E+07 | 3,39E+07 |
| sc7 | 4,04E+07 | 4,05E+07 |
| sc8 | 4,22E+07 | 4,23E+07 |
| sc9 | 4,22E+07 | 4,23E+07 |
| sc10 | 3,38E+07 | 3,38E+07 |

The following table shows the comparison between the optimization by the method 100 and by the software Cplex (IBM) given different scenarios (each scenario corresponding to specific electricity prices and water income constraints) and in the case of a non-linear problem.
As we can observe, contrary to the Cplex method which cannot converge in all the scenarios (except sc1), the method 100 allows determining a global optimum.

| Scenario | HydroKISS | Cplex-Repaired |
|---|---|---|
| sc1 | 3,50E+07 | 2,83E+07 |
| sc2 | 4,01E+07 | - |
| sc3 | 4,25E+07 | - |
| sc4 | 3,93E+07 | - |
| sc5 | 2,66E+07 | - |
| sc6 | 3,04E+07 | - |
| sc7 | 3,49E+07 | - |
| sc8 | 3,49E+07 | - |
| sc9 | 3,70E+07 | - |
| sc10 | 2,94E+07 | - |

*Application of the method 100 to image registration*

The performance of the optimization method 100 can be illustrated on a 2D image registration.
The image registration is a technic widely spread in the medical imaging analysis, its goal is to determine the exact transformation which occurred between two images of the same view.
In first, a brief description of the image registration process is presented, and formulated as an optimization problem.
An example of a 2D image of coronary arteries obtained with an X-ray angiography can be considered.
The idea is to perform transformation on one of the two images until a defined similarity measure is optimized. Registration can be used, for instance, to detect the speed growth of a tumor, or study the evolution of the size and shape of a diseased organ.

The registration method follows the pattern herein after:

- First, determination of the type of the transformation which occurred between the two images. There are a large number of possible transformations described in the literature and the model choice is an input to the registration system (procedure). Herein, a rigid transformation was used.

- Then, the similarity measure to use: we use the quadratic error. This criterion must be minimized to find the optimal parameters of the transformation between the two images. Let I1 and I2 be the two image to be compared composed of N pixels. I1 (X) is the intensity of the pixel X in the image 1. The quadratic error E (Φ) becomes:

$$E(\Phi) = \sum_{X=1}^{N} [I1(X) - I2(T(X))]^2$$

where T is the transformation for a given Φ.

- -To minimize the previous criterion, an optimization method has to be used. Fractal approach will be used to solve this problem.

It is very practical to use this transformation for illustration. A rigid transformation is defined by two things: a rotation of an angle Φ around a point and a translation T (a, b).

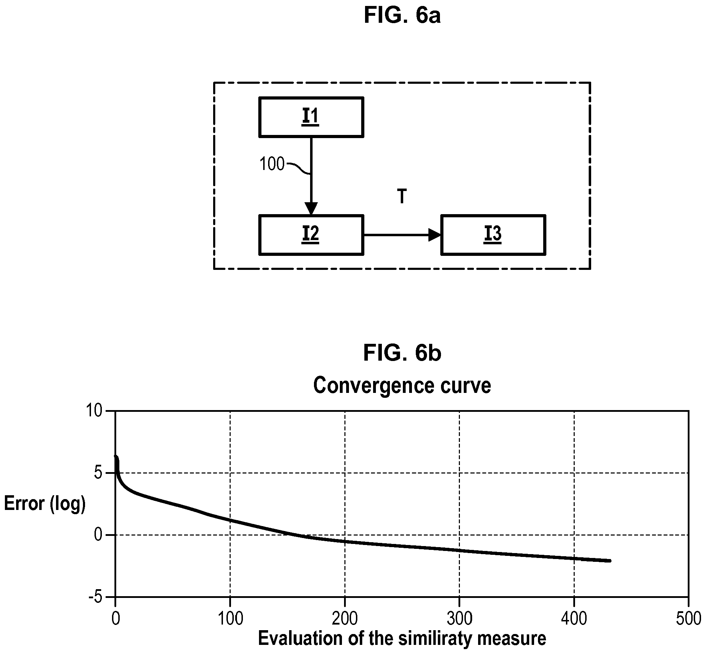

Figure 6a illustrates such transformation and the use of the method 100 to determine its parameters.

An image I3 is the result of the image I2 with the transformation T.

Figure 6b illustrates a convergence curve of the errors, between the two images I1 and I3, when applying the method 100 to optimize the parameters of the transformation T.

At final, the two images I1 and I3 are the same with an error of 10-7

Thus, the method 100 allows finding the best parameters to register the images.

*Application of the method 100 to the problem of molecular aggregation*

The Lennard - Jones (U) problem consists, given an aggregate of K atoms, representing a molecule, in finding the relative positions of these atoms whose overall potential energy is minimal in a three - dimensional Euclidean space.

The problem U is as follows: the molecule consists of K atoms, $x^i = \{x^i_1, x^i_2, x^i_3\}$ represents the coordinates of the atom i in three-dimensional space, knowing that the K atoms are located at positions $((x^1), ..., (x^k))$ where $x^i \in R^3$

and i = 1,2, ..., K. The potential energy formula of U for a pair of atoms is given by: $v(r_{ij}) = \frac{1}{r_{ij}^{12}} - \frac{1}{r_{ij}^{6}}$ such that $1 \leq i$, $j \leq K$ where $Vij = \|x^i - x^j\|$. The total potential energy is the sum of the energies resulting from the interactions between each couple of atoms of the molecule. The most stable configuration of the molecule corresponds to an overall minimum potential energy that can be obtained by minimizing the function $V_k(x)$ in the following equation:

$$Min\ V_k(x) = \sum_{i<j} v\left(\|x_i - x_j\|\right) = \sum_{i=1}^{K-1} \sum_{j=i+1}^{K} \left( \frac{1}{\|x_i - x_j\|^{12}} - \frac{1}{\|x_i - x_j\|^{6}} \right)$$

For example, we use 9 atoms in a research space [-2, 2]. The value of the overall optimum in this case is f * = -24,113360.

The other optimization algorithm that was used to solve this problem is the SPSO 2007 (Standard Particle Swarm Optimization). The dimension of the problem is 27, this problem is not large scale but this comparison shows that even on small dimensions the method 100 is adapted and competitive.

| Number of atoms | SPSO 2007 | Method 100 | Global optimum |
|---|---|---|---|
| 9 | +2.31 | -10.6855 | -24,113360 |

*References*

[1] R. Storn and K. Price, Differential evolution-a simple and efficient adaptive scheme for global optimization over continuous spaces. ICSI Berkeley,1995, vol. 3.

[2] L. J. Eshelman and J. D. Schaffer, "Real-coded genetic algorithms and interval-schemata." in FOGA, L. D. Whitley, Ed. Morgan Kaufmann, 1992, pp.187-202.

[3] A. Auger and N. Hansen, "A restart cma evolution strategy with increasing population size," in 2005 IEEE Congress on Evolutionary Computation,vol. 2, Sept 2005, pp. 1769-1776 Vol. 2.

[4] D. Molina, M. Lozano, A. M. Sanchez, and F. Herrera, "Memetic algorithms based on local search chains for large scale continuous optimization problems: Ma-ssw-chains," Soft Computing, vol. 15, no. 11, pp. 2201-2220, 2011.

[5] L.-Y. Tseng and C. Chen, "Multiple trajectory search for large scale global optimization," in 2008 IEEE Congress on Evolutionary Computation (IEEE World Congress on Computational Intelligence), June 2008, pp. 3052-3059.

[6] A. LaTorre, S. Muelas, and J.-M. Pena, "A mos-based dynamic memetic differential evolution algorithm for continuous optimization: a scalability test,"Soft Computing, vol. 15, no. 11, pp. 2187-2199,2011.

[7] A. K. Qin and P. N. Suganthan, "Self-adaptive differential evolution algorithm for numerical optimization," in 2005 IEEE Congress on Evolutionary Computation, vol. 2, Sept 2005, pp. 1785-1791 Vol. 2.

[8] A. Duarte, R. Marti, and F. Gortazar, "Path relinking for large-scale global optimization," Soft Computing, vol. 15, no. 11, pp. 2257-2273, 2011.

[9] M. Z. Ali, N. H. Awad, and P. N. Suganthan, "Multi-population differential evolution with balanced ensemble of mutation strategies for large-scale global optimization," Applied Soft Computing, vol. 33, pp. 304 - 327, 2015. [Online]. Available: http://www.sciencedirect.com/science/article/pii/S1568494615002 458

[10] E. Theodorsson-Norheim, "Friedman and quade tests: Basic computer program to perform nonparametric two-way analysis of variance and multiple comparisons on ranks of several related samples," Computers in biology and medicine, vol. 17, no. 2, pp. 85-99, 1987.

*Annex: Inflation coefficient estimation*

Considering the radius r of outer hypersphere H and r' the radius of sub-hyperspheres sH: let the centers of sub-hyperspheres sH be located in points $O_i^\pm = (0,\dots,0,\overset{+}{_-}d,0,\dots,0);$ where the only non-zero entry $\pm d$ is in i-th position, and $d = r - r' = r\left(1 - \frac{1}{1+\sqrt{2}}\right).$ The minimal required inflation rate $\delta_n$ is estimated such as any arbitrary point from inside of a hypersphere H is covered by one of inflated sub-hyperspheres sH with radius $r'' = \delta_n r'$. To this end, first we estimate the inflated radius $r_A$ for an arbitrary fixed point A; and then r'' is defined as $r'' = \max r_A$.

Let point $A(x_1,\dots,x_n)$ lie inside the hypersphere H, i.e. $x_1^2 + x_2^2 + \dots + x_n^2 \leq r^2.$ Radius $r_A$ is minimal required to cover A, thus

$$r_A^2 = \min_{i,\pm} \|O_i^\pm A\|^2 = \min_{i,\pm}\left(\sum_{j\neq i} x_j^2 + (x_i \pm d)^2\right)$$

$$= \min_{i,\pm}\left(\sum_{j\neq i} x_j^2 + (|x_i| \pm d)^2\right).$$

As $|x_i| \geq 0$, $d > 0$, then $(|x_i| - d)^2 < (|x_i| + d)^2$. Hence

$$r_A^2 = \min_i\left(\sum_{i\neq j} x_j^2 + (|x_i| - d)^2\right)$$

Denote $a^2 = \|OA\|^2 = \sum_{i=1}^n x_i^2.$ Then

$$r_A^2 = \min_i \left( \sum_{i \neq j} x_j^2 + (|x_i| - d)^2 \right)$$

$$= \min_i \left( a^2 - x_i^2 + (|x_i| - d)^2 \right)$$

$$= a^2 + \min_i \left( -x_i^2 + (|x_i| - d)^2 \right)$$

$$= a^2 - \max_i \left( x_i^2 - (|x_i| - d)^2 \right)$$

$$= a^2 - \max_i d(2|x_i| - d)$$

$$= a^2 - d \max_i (2|x_i| - d)$$

$$= a^2 - d(2 \max_i |x_i| - d).$$

Then, in order to cover all points inside hypersphere we take the maximum of inflation radius $r_A$ over A. Thus

$$r''^2 = \max_{\|OA\|^2 \leq r^2} r_A^2$$

$$= \max_{0 \leq a \leq r} \max_{\|OA\|=a} \left( a^2 - d(2 \max_i |x_i| - d) \right)$$

We show that point A cannot be a maximum point unless all of its coordinates are equal up to the sign. Without loss of generality assume that $x_i \geq 0$ for all $1 \leq i \leq n$ (indeed, the sign of $x_i$ does not influence the value of considered function under *max* operator). Assume that there exists an index s such that $x_s \neq max\ x_k$. Let $i_1, i_{2,...,i_n}$ be the indices of the biggest coordinates of A, and $j$ be the entry of the second biggest coordinate:

$$x_{i_1} = x_{i_2} = \ldots = x_{i_m} = \max_k x_k$$

$$x_j = \max_{k \neq i_1, i_2, \ldots, i_m} x_k$$

Under this assumption it is possible to "shift" point A along the sphere $\|OA\| = a$ in such a way that the maximized function is increasing, and thus point A cannot be a point of maximum. Consider another point, A', with coordinates (x'1,....,x'n) where

$$x'_k = x_k, \quad k \neq i_1, i_2, \ldots, i_m, j,$$

$$x'_i = x_i - \delta^-, \quad |i = i_1, i_2, \ldots, i_m,$$

$$x'_j = x_j + \delta^+,$$

and $0 < \delta^-, \delta^+ < \frac{1}{2}(x_{i_1} - x_j)$ are such that $\|OA\|^2 = \|OA\|^2 = a^2$. Then

$$x'_i = x_i - \delta^- > x_j + \delta^+ = x'_j, \quad i = i_1, i_2, \ldots,$$

$$x'_j = x_j + \delta^+ > x_j \geq x_k = x'_k, \quad k \neq i_1, i_2, \ldots, i_m, j.$$

Hence $x'_{i_1} = x'_{i_2} = \ldots x'_{i_m} = \max\limits_k x'_k.$ Denote $f(A) = (a^2 - d(2\max\limits_k |x_k| - d)),$ where as before $a^2 = \|OA\|^2.$
Then

$$\begin{aligned}
f(A') &= (a^2 - d(2x'_{i_1} - d)) \\
&= (a^2 - d(2x_{i_1} - 2\delta^- - d)) \\
&= (a^2 - d(2x_{i_1} - d)) + 2\delta^- d \\
&> f(A).
\end{aligned}$$

In other words.

$$\arg\max\limits_{\|OA\|=a}(a^2 - d(2\max\limits_i |x_i| - d)) \neq A.$$

We can also remark here that the maximum exists. Indeed, function f(A) is continuous and can be considered as function on a compact of lower dimensions, defined by equality $\|OA\| = a$. Hence by extreme value theorem it reaches its maximum. Basing on the inequality above, we infer that the point of maximum has to have equal coordinates (up to the sign). In particular, the maximum is reached in point A* with coordinates $\left(\dfrac{a}{\sqrt{n}}, \ldots, \dfrac{a}{\sqrt{n}}\right).$ Returning to the expression for inflation radius r"; we get

$$\begin{aligned}
r''^2 &= \max\limits_{0 \leq a \leq r} \max\limits_{\|OA\|=a} (a^2 - d(2\max\limits_i |x_i| - d)) \\
&= \max\limits_{0 \leq a \leq r} \left(a^2 - d\left(\frac{2a}{\sqrt{n}} - d\right)\right) \\
&= \max\limits_{0 \leq a \leq r} \left(a^2 - \frac{2ad}{\sqrt{n}} + d^2\right).
\end{aligned}$$

The quadratic function of a, under the max operator, reaches its maximum on one of interval ends. Denote $g(a) = a^2 - \dfrac{2ad}{\sqrt{n}} + d^2.$ Then

$$g(0) = d^2 = \lambda^2 r^2,$$

$$g(r) = r^2 - \frac{2rd}{\sqrt{n}} + d^2 = r^2 - \frac{2\lambda r^2}{\sqrt{n}} + \lambda^2 r^2,$$

where $\lambda = 1 - \dfrac{1}{1+\sqrt{2}} = \dfrac{\sqrt{2}}{1+\sqrt{2}} \approx 0.59.$ From this, it shows that for n ≥ 2

$$\frac{2\lambda}{\sqrt{n}} < 1,$$

and so g(r) > g(0). Finally.

$$r''^2 = \max_{0 \le a \le r} \left( a^2 - \frac{2ad}{\sqrt{n}} + d^2 \right)$$
$$= g(r)$$
$$= r^2 - \frac{2\lambda r^2}{\sqrt{n}} + \lambda^2 r^2$$
$$= r^2 \left( 1 - \frac{2\lambda}{\sqrt{n}} + \lambda^2 \right),$$

And thus

$$\alpha_n = \frac{r''}{r'} = \frac{r\sqrt{1 - \frac{2\lambda}{\sqrt{n}} + \lambda^2}}{r(1 + \sqrt{2})^{-1}} = (1 + \sqrt{2})\sqrt{1 - \frac{2\lambda}{\sqrt{n}} + \lambda^2}$$

$$= (1 + \sqrt{2})\sqrt{1 - \frac{2\sqrt{2}}{\sqrt{n}(1 + \sqrt{2})} + \frac{2}{(1 + \sqrt{2})^2}}$$

$$= \sqrt{(1 + \sqrt{2})^2 - \frac{2\sqrt{2}(1 + \sqrt{2})}{\sqrt{n}} + 2}$$

$$= \sqrt{5 + 2\sqrt{2} - \frac{2\sqrt{2}(1 + \sqrt{2})}{\sqrt{n}}}.$$

In conclusion, in case we set the unified inflation coefficient, it would have to be equal to:

$$\alpha = \sup_{n \ge 1} \alpha|_n = \sup_{n \ge 1} \sqrt{5 + 2\sqrt{2} - \frac{2\sqrt{2}(1 + \sqrt{2})}{\sqrt{n}}} = \sqrt{5 + 2\sqrt{2}} \approx 2.80$$

**Claims**

1.  Method for solving a nonlinear optimization problem implying technical constraints relating to technical parameters, said technical parameters being of a number greater than 50, said solving method being implemented by processing means of a computing unit, **characterized in that** said method is based on a fractal geometric partitioning of a search space (E) using a plurality of hyperspheres (H) as a geometrical form and wherein the hyperspheres (H) partitioning said search space (E) are overlapping.

2.  Method for solving a nonlinear optimization problem according to claim 1, said solving method comprising the following steps:

    a) initialization of a search hypersphere (H) with a dimension D equal to the number of parameters;
    b) decomposing said search hypersphere (H) into a plurality of sub-hyperspheres (sH), the said sub-hyperspheres (sH) overlapping each other;
    c) for each sub-hypersphere (sH), calculation of a sub-hypersphere (sH) quality and ranking of the sub-hyperspheres (sH) as a function of said calculated quality;
    d) determination among the sub-hyperspheres (sH) of the sub-hypersphere (sH) having the best quality;
    e) until a first stopping criterion is reached, repetition of steps b) to d), implemented on the basis of a search hypersphere (H) corresponding to the sub-hypersphere (sH) having the best quality as determined in the previous step;
    f) when the first stopping criterion is reached, for each sub-hypersphere (sH) resulting from the last implementation of step b), determining and storing a solution of each sub-hypersphere (sH) into a memory area of the computing unit;

g) until a second stopping criterion is reached, steps b) to e) are implemented on the basis of a search hypersphere (H) corresponding to the following sub-hypersphere (sH) of the classification determined in step c) following the penultimate implementation of b); and

h) determining an optimum solution among the solutions stored in the memory area and storing the values of the technical parameters corresponding to this optimum solution.

3. Method for solving a nonlinear optimization problem according to claim 2, wherein the first stopping criterion is a maximum level (kmax) of recursive decomposition of the initial search hypersphere (H).

4. Method for solving a nonlinear optimization problem according to any one of claims 2 to 3, wherein the second stopping criterion is a tolerance threshold ($\Upsilon_{min}$).

5. Method for solving a nonlinear optimization problem according to any one of claim 2 to 3, wherein the second stopping criterion is reached when a solution is stored for all the sub-hyperspheres (sH) from all the decomposition levels of the fractal partitioning.

6. Method for solving a nonlinear optimization problem according to any one of claims 2 to 5, wherein the step b) comprises the decomposition of the search hypersphere (H) in 2xD sub-hyperspheres (sH).

7. Method for solving a nonlinear optimization problem according to any one of claims 2 to 6, wherein the step a) of initialization comprises the determination of a maximum level (kmax) of recursive decomposition of the initial search hypersphere (H).

8. Method for solving a nonlinear optimization problem according to the previous claim, wherein the maximum level (kmax) of recursive decomposition of the search hypersphere (H) is equal to 5.

9. Method for solving a nonlinear optimization problem according to any one of claims 2 to 8, wherein the step c) further comprises storing sub-hypersphere classification into a memory area.

10. Method for solving a nonlinear optimization problem according to any one of claims 2 to 9, wherein the step a) of initialization of the search hypersphere (H) comprises: determining the position of the center C and the initial radius R of the search hypersphere (H), such as C = L + (U - L)/2, R = (U-L)/2, wherein U is the upper bound and L is the lower bound of a search space (E).

11. Method for solving a nonlinear optimization problem according to any one of claims 2 to 10, wherein the sub-hyperspheres (sH) overlapping each other of step b) are obtained by decomposing the search hypersphere (H) into a plurality of sub-hyperspheres (sH), then applying an inflation factor of the said sub-hyperspheres (sH).

12. Method for solving a nonlinear optimization problem according to the previous claim, wherein the inflation factor corresponds to an increase of the radius of sub-hyperspheres (sH) by a factor of at least 1.75.

13. Method for solving a nonlinear optimization problem according to any one of claims 2 to 11, wherein the inflation factor corresponds to an increase of the radius of sub-hyperspheres (sH) by a factor of at least 2.80.

14. Method for solving a nonlinear optimization problem according to any one of the previous claims, wherein a plurality of sub-hyperspheres (sH) is stored into a memory area.

15. Method for solving a nonlinear optimization problem according to the previous claim, wherein the plurality of sub-hyperspheres (sH) are stored into a memory area by the storing the position of the center C of the said sub-hyperspheres (sH).

16. Method for solving a nonlinear optimization problem according to any of claims 14 to 15, wherein the position of a plurality of sub-hyperspheres (sH) is computed from a position of a sub-hypersphere (sH) stored into a memory area.

17. A computer program product having computer-executable instructions to enable a computer system to perform the method of any one of claims 1 to 16.

18. Method for solving a nonlinear optimization problem according to claim 2, wherein the step d) determining the sub-hypersphere (sH) having the best quality and/or the step f) of determining and storing a solution of each sub-hypersphere (sH) into a memory area is performed using existing optimization software.

**FIG. 1**

FIG. 2b

FIG. 2a

**FIG. 3a**

**FIG. 3b**

Circled search space

Original search space

EP 3 340 132 A1

**FIG. 4**

| Method | Ranking (D=50) | Ranking (D=100) | Ranking (D=200) | Ranking (D=500) | Ranking (D=1000) |
|---|---|---|---|---|---|
| FDA | 4,9474 | 4,5526 | 4,7895 | 4,6579 | 4,2368 |
| mDE-bES | 6,0789 | 6,3421 | 4,9737 | 5,1053 | 5,1579 |
| SaDE | 4,5789 | 14,4474 | 13,5263 | 12,6579 | 12,3421 |
| MTS-LS1 | 9,6316 | 11,1053 | 10,4211 | 10,3421 | 9,1579 |
| VXQR1 | 8,3684 | 8,5263 | 8,7632 | 8,6579 | 8,0789 |
| EM323 | 7,8684 | 7,8947 | 7,9474 | 8,4474 | 7,4474 |
| EvoPROpt | 13,0263 | 13,1053 | 12,6316 | 12,3684 | 12,5789 |
| Tuned IPSOLS | 7,6053 | 7,2632 | 6,9211 | 6,8421 | 6,0263 |
| RPSO-vm | 10,7105 | 9,6842 | 9,6316 | 9,0000 | 7,7368 |
| MA-SSW-Chains | 7,6842 | 7,9474 | 8,2895 | 10,0263 | 10,3421 |
| SaDE-MMTS | 4,8684 | 4,7895 | 5,3158 | 5,4474 | 5,7895 |
| GODE | 7,0526 | 6,3684 | 6,2105 | 6,0263 | 6,7895 |
| DE-D40'+Mm' | 6,9474 | 6,2368 | 7,0000 | 6,2632 | 6,1579 |
| SOUPDE | 6,4474 | 6,2368 | 6,8421 | 6,3684 | 5,6842 |
| G-CMA-ES | 12,8684 | 13,0263 | 12,8158 | 13,5000 | |
| CHC | 14,5789 | 15,2105 | 15,5526 | 15,6842 | 14,8421 |
| DE | 9,7368 | 10,2632 | 11,3684 | 11,6053 | 11,9474 |

Ranking (D=50)　Ranking (D=100)　Ranking (D=200)　Ranking (D=500)　Ranking (D=1000)

# FIG. 5

## FIG. 6a

## FIG. 6b

### Convergence curve

EP 3 340 132 A1

Europäisches
Patentamt

European
Patent Office

Office européen
des brevets

# EUROPEAN SEARCH REPORT

Application Number

EP 16 30 6810

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 712 738 B2 (DANNA EMILIE JEANNE ANNE [US] ET AL) 29 April 2014 (2014-04-29) * the whole document * ----- | 1-18 | INV. G06Q10/04 G06Q10/06 G06Q10/08 G06Q10/10 G06Q50/28 |

TECHNICAL FIELDS
SEARCHED (IPC)

G06Q

The present search report has been drawn up for all claims

| Place of search | Date of completion of the search | Examiner |
|---|---|---|
| Munich | 9 March 2017 | Pastore, Edoardo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6810

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2017

| Patent document cited in search report | Publication date | Patent family member(s) | Publication date |
|---|---|---|---|
| US 8712738 B2 | 29-04-2014 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8712738 B

- US 20080247646 A

**Non-patent literature cited in the description**

- **D. ASHLOCK ; J. SCHONFELD.** A fractal representation for real optimization. *2007 IEEE Congress on Evolutionary Computation,* September 2007, 87-94
- **M. DORIGO ; V. MANIEZZO ; A. COLORNI.** Positive feedback as a search strategy. *Technical report 91-016,* June 1991
- **D. E. GOLDBERG.** Genetic Algorithms in Search, Optimization and Machine Learning. Addison-Wesley Longman Publishing Co., Inc, 1989
- **S. KIRKPATRICK.** *Optimization by simulated annealing: Quantitative studies,* 1984, 975-986
- **R. STORN ; K. PRICE.** Differential evolution-a simple and efficient adaptive scheme for global optimization over continuous spaces. *ICSI Berkeley,* 1995, vol. 3
- Real-coded genetic algorithms and interval-schemata. **L. J. ESHELMAN ; J. D. SCHAFFER.** FOGA. Morgan Kaufmann, 1992, 187-202
- **A. AUGER ; N. HANSEN.** A restart cma evolution strategy with increasing population size. *2005 IEEE Congress on Evolutionary Computation,* September 2005, vol. 2, 1769-1776
- **D. MOLINA ; M. LOZANO ; A. M. SANCHEZ ; F. HERRERA.** Memetic algorithms based on local search chains for large scale continuous optimization problems: Ma-ssw-chains. *Soft Computing,* 2011, vol. 15 (11), 2201-2220

- **L.-Y. TSENG ; C. CHEN.** Multiple trajectory search for large scale global optimization. *2008 IEEE Congress on Evolutionary Computation,* June 2008, 3052-3059
- **A. LATORRE ; S. MUELAS ; J.-M. PENA.** A mos-based dynamic memetic differential evolution algorithm for continuous optimization: a scalability test. *Soft Computing,* 2011, vol. 15 (11), 2187-2199
- **A. K. QIN ; P. N. SUGANTHAN.** Self-adaptive differential evolution algorithm for numerical optimization. *2005 IEEE Congress on Evolutionary Computation,* September 2005, vol. 2, 1785-1791
- **A. DUARTE ; R. MARTI ; F. GORTAZAR.** Path relinking for large-scale global optimization. *Soft Computing,* 2011, vol. 15 (11), 2257-2273
- **M. Z. ALI ; N. H. AWAD ; P. N. SUGANTHAN.** Multi-population differential evolution with balanced ensemble of mutation strategies for large-scale global optimization. *Applied Soft Computing,* 2015, vol. 33, 304-327, http://www.sciencedirect.com/science/article/pii/S1568494615002 458
- **E. THEODORSSON-NORHEIM.** Friedman and quade tests: Basic computer program to perform nonparametric two-way analysis of variance and multiple comparisons on ranks of several related samples. *Computers in biology and medicine,* 1987, vol. 17 (2), 85-99